# EUROPÄISCHE PATENTSCHRIFT

(11) **EP 0 803 412 B1**
(45) Veröffentlichungstag und Bekanntmachung des Hinweises auf die Patenterteilung: **12.12.2001**
(21) Anmeldenummer: 97106714.5
(22) Anmeldetag: 23.04.1997
(51) Int. Cl.: B60R 22/46

(54) **Sicherheitsgurtsystem**
Safety belt system
Système de ceinture de sécurité

(30) Priorität: 23.04.1996 DE 29607362 U
(43) Veröffentlichungstag der Anmeldung: 29.10.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- DE-A- 4 020 600
- US-A- 4 258 934
- US-A- 4 458 921

## Beschreibung

Die Erfindung betrifft ein Sicherheitsgurtsystem mit einem Gurtschloß und einer über ein Zugmittel an dem Gurtschloß angreifenden Rückstrammeinrichtung, zur Bewegung des Gurtschlosses auf einem Straffweg, wobei die Rückstramm einrichtung eine durch einen Gasgenerator aktivierbare Kolben/Zylinder-Einheit umfaßt und am Fahrzeugaufbau oder an einem Fahrzeugsitz befestigt ist, wobei die Bewegungsrichtungen des Gurtschlosses und des Kolbens der Kolben/Zylinder-Einheit bei aktivierter Rückstrammeinrichtung übereinstimmen und der Gasgenerator mit einem Gasgeneratorgehäuse an eine dem Gurtschloß zugewandte Stirnwand der Kolben/Zylinder-Einheit angrenzt und wobei sich das Zugmittel durch eine Öffnung in der Stirnwand hindurch zum Kolben erstreckt.

Aus der US 4 917 210 ist ein Sicherheitsgurtsystem bekannt, bei dem die Kolben/Zylinder-Einheit parallel zum Fahrzeugboden an diesem befestigt ist und einen an einer Stirnwand des Zylinders fixierten Seilumlenker aufweist. Dieser hat die Aufgabe, das im Bereich des Zylinders parallel zu diesem geführte Zugseil mit dem an ihm befestigten Gurtschloß schräg nach oben in Kraftflußrichtung des mit dem Gurtschloß zu verbindenden Sicherheitsgurts zu lenken. Das bekannte Sicherheitsgurtsystem baut jedoch sehr groß, was angesicht des ohnehin im Bereich der Gurtschloßbefestigung geringen vorhandenen Raumes besonders nachteilig ist.

Aus der GB-PS 1 381 753 ist ein Sicherheitsgurtsystem bekannt, bei dem ein Gurtschloß bei aktivierter Rückstrammeinrichtung in gleicher Richtung wie der Kolben bewegt wird, jedoch ist das Gurtschloß direkt an einer starren, überlangen Kolbenstange befestigt. Die Kolbenstange kann sehr leicht durch unbeabsichtigte Stöße, zum Beispiel beim Reinigen des Fahrzeugs, verbogen werden, so daß die Rückstrammbewegung in einem Kollisionsfall durch die verbogene Kolbenstange erschwert oder sogar blockiert wird.

Aus der US 4 458 921 ist ein gattungsgemäßes Sicherheitsgurtsystem bekannt, bei dem der Gasgenerator an eine Stirnwand der Kolben/Zylinder-Einheit angrenzt, wobei sich das Zugmittel durch eine Öffnung in der Stirnwand zum Kolben erstreckt. Auch hier besteht das Zugmittel aus einer Kolbenstange, an der ein Gurtbeschlag befestigt ist, weshalb dieses System dieselben Nachteile aufweist wie das vorgenannte.

Aufgabe der Erfindung ist es deshalb, ein Sicherheitsgurtsystem zu schaffen, das die oben genannten Nachteile nicht aufweist und noch kompakter gebaut ist.

Diese Aufgabe wird durch ein Sicherheitsgurtsystem nach Anspruch 1 gelöst.

Die Erfindung sieht keine starre, nicht biegsame Verbindung zwischen dem Gurtschloß und dem Kolben vor, sondern benutzt als Verbindung ein Zugseil, das zudem den Vorteil bietet, daß es sich in seiner Lage dem Verlauf des Sicherheitsgurtes im Bereich des Gurtschlosses, der von der jeweiligen Körperform des Fahrzeuginsassen abhängt, anpassen kann.

Ein weiteres wesentliches Merkmal der vorliegenden Erfindung besteht darin, daß durch Anschlagen des Gehäuses des Gurtschlosses an der Stirnwand der Kolben/zylinder-Einheit der straffweg begreuzt ist.

Das Zugmittel wird so gut wie vollständig in den Zylinder eingeschoben, wobei der bislang stets vorgesehene Sicherheitsabstand zwischen Gehäuse und Zylinder aufgegeben wird. Dadurch läßt sich der Straffweg maximieren und die axialen Abmaße der Rückstrammeinrichtung reduzieren. Durch diese Maßnahme wird zudem eine einfache Begrenzung der durch die Rückstrammeinrichtung hervorgerufenen Verschiebung von Kolben und Gurtschloß und damit eine Begrenzung des Straffweges erreicht, und die Rückstrammeinrichtung kann ohne Seilumlenkung ausgeführt werden.

Gemäß einer vorteilhaften Ausführungsform der Erfindung kann eine Seilkausche, über die das Zugseil am Gurtschloß befestigt ist, nach Aktivierung der Rückstrammeinrichtung in die Stirnwand des Zylinders der Kolben/Zylinder-Einheit eindringen und sie sogar durchdringen. Bei sämtlichen bisherigen Bauformen von Sicherheitsgurtsystemen ist die Seilkausche bei aktivierter Rückstrammeinrichtung stets vollständig außerhalb des Zylinders gelegen, um den Zylinder nicht zu beschädigen. Da jedoch nach Aktivierung der Rückstrammeinrichtung, wenn die Seilkausche nahe zur Stirnwand des Zylinders verschoben worden ist, der durch das pyrotechnische Material hervorgerufene Impuls bereits großteils auf den Kolben übertragen worden ist, kann die Seilkausche auch die Stirnwand durchdringen, ohne daß dies die Funktionsweise des erfindungsgemäßen Sicherheitsgurtsystems einschränkt. Wenn das Gasgeneratorgehäuse Teil des Zylinders oder umgekehrt der Zylinder Teil des Gasgeneratorgehäuses ist, durchdringt die Seilkausche auch das Gasgeneratorgehäuse.

Gemäß einer Ausführungsform ist der Gasgenerator im Inneren des Zylinders angeordnet, was eine platzsparende Lösung darstellt. Bei dieser Ausgestaltung kann der Zylinder zum Beispiel einen Teil des Gasgeneratorgehäuses bilden oder umgekehrt das Gasgeneratorgehäuse einen Teil des Zylinders.

Weiter ist vorzugsweise in einer Öffnung im Zylinder und/ oder im Gasgeneratorgehäuse eine das Zugseil umgebende Dichtung vorgesehen. Da sich das Zugseil bis ins Innere des Zylinders erstreckt, durchläuft es auch die Stirnwand des Zylinders, und, wenn das Gasgeneratorgehäuse an die Stirnwand angrenzt oder Teil des Zylinders ist, auch das Gasgeneratorgehäuse. Durch das Vorsehen einer Dichtung in diesem Bereich wird vermieden, daß bei Zündung des pyrotechnischen Materials im Gasgenerator Leckströme im Bereich der Öffnung auftreten können.

Eine Zündeinheit kann an die dem Gurtschloß zugewandte Stirnwand des Gasgeneratorgehäuses angrenzen, wobei sich das Zugseil durch eine Öffnung in der Zündeinheit hindurch zum Kolben erstreckt. Alternativ kann die Zündeinheit auch am Zylindermantel befestigt sein und über eine seitliche Öffnung in diesem und in dem innerhalb des Zylinders angeordneten Gasgeneratorgehäuse mit einem das pyrotechnische Material enthaltenden Raum in Verbindung stehen.

Der Zylinder selbst kann über ein Befestigungsmittel vorzugsweise schwenkbar am Fahrzeugaufbau oder einem Fahrzeugsitz befestigt sein, wobei an der Mantelfläche des Zylinders hierzu eine seitlich abstehende Befestigungslasche angeformt ist, wodurch die axiale Baulänge verringert werden kann. Darüber hinaus kann auch an der Mantelfläche des Zylinders ein Außengewinde zu dessen Befestigung in einer Gewindebohrung im Fahrzeugboden angeordnet sein, so daß der Zylinder teilweise im Fahrzeugboden versteckt ist und für das erfindungsgemäße Sicherheitsgurtsystem noch weniger Platz im Fahrzeuginneren benötigt wird.

Um die Abdichtung zwischen dem Zugseil und der Stirnwand des Zylinders zu erleichtern, ist das Zugseil mit einer Ummantelung umgeben, die eine kreiszylindrische Außenumfangsfläche hat. Hierdurch kann bei Aktivierung der Rückstrammeinrichtung und der anschließenden Verschiebung des Zugseils auch keine unnötige vorzeitige Zerstörung der fakultativ vorgesehenen Dichtung durch ein an seiner Außenfläche rauhes Zugseil erfolgen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein bislang übliches Sicherheitsgurtsystem mit einem Seilumlenker,
- Figur 2 eine erste Ausführungsform des erfindungsgemäßen Sicherheitsgurtsystems bei nicht aktivierter Rückstrammeinrichtung,
- Figur 3 ein Sicherheitsgurtsystem bei aktivierter Rückstrammeinrichtung, das nicht Bestandteil der Erfindung ist
- Figur 4 in teilweiser Längsschnittansicht eine zweite Ausführungsform des erfindungsgemäßen Sicherheitsgurtsystems,
- Figur 5 in teilweiser Längsschnittansicht eine dritte Ausführungsform des erfindungsgemäßen Sicherheitsgurtsystems,
- Figur 6 und 7 Befestigungsmöglichkeiten für den Zylinder im Fahrzeugboden, jeweils in Längsschnittansicht,
- Figur 8 eine weitere Befestigungsmöglichkeit für den Zylinder in Form eines Bajonettverschlusses,
- Figur 9 eine Ansicht des in Figur 8 gezeigten Bajonettverschlusses in Richtung des Pfeiles A,
- Figur 10 einen Zylinder mit einem zusammengepreßten und gebogenen Ende zur Befestigung an einem Fahrzeugsitz in Längsschnittansicht, und
- Figur 11 einen Zylinder mit einem zusammengepreßten, nicht gebogenen Ende in Längsschnittansicht.

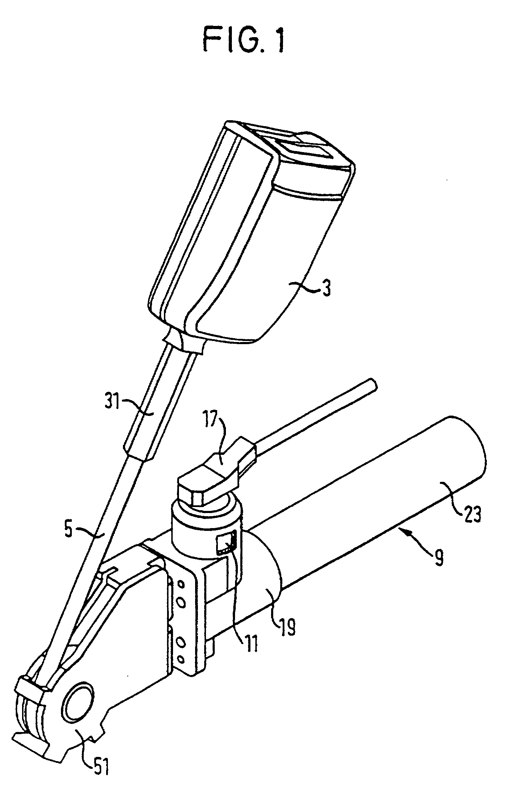

In Figur 1 ist ein bislang in Fahrzeugen häufig eingesetztes Sicherheitsgurtsystem gezeigt, welches ein Gurtschloß 3 umfaßt, das über eine Seilkausche 31 mit einem Zugseil 5 verbunden ist, welches wiederum mit einem nicht gezeigten, in einem Zylinder 23 befindlichen Kolben verbunden ist. Der Kolben und der Zylinder 23 bilden eine Kolben/Zylinder-Einheit 9, die über einen Gasgenerator 11 aktivierbar ist. Der Gasgenerator 11 sitzt dabei im Inneren einer in einer speziell hierfür ausgebildeten zylindrischen Kammer in einem Gasgeneratorgehäuse 19, welches an eine nicht gezeigte vordere Stirnwand des Zylinders 23 angrenzt. Eine Zündeinheit 17 steht mit dem pyrotechnischen Material des Gasgenerators 11 in Verbindung, um dieses zu zünden. An der Vorderseite des Gasgeneratorgehäuses 19 ist ein Seilumlenker 51 vorgesehen, der dazu dient, das ansonsten parallel zum Fahrzeugboden verlaufende Zugseil 5 schräg nach oben zu richten. Da bei betätigter Rückstrammeinrichtung eine radiale Kraft auf den Seilumlenker 51 und gegebenenfalls auch auf den Zylinder 23 einwirkt, müssen der Seilumlenker 51 und der Zylinder 23 durch mehrere nicht gezeigte Befestigungsmittel am Fahrzeugaufbau oder einem Fahrzeugsitz befestigt werden.

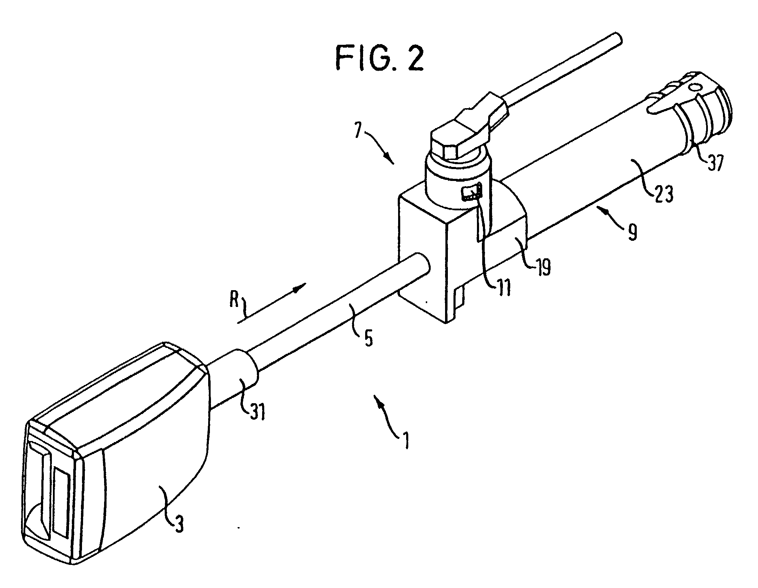

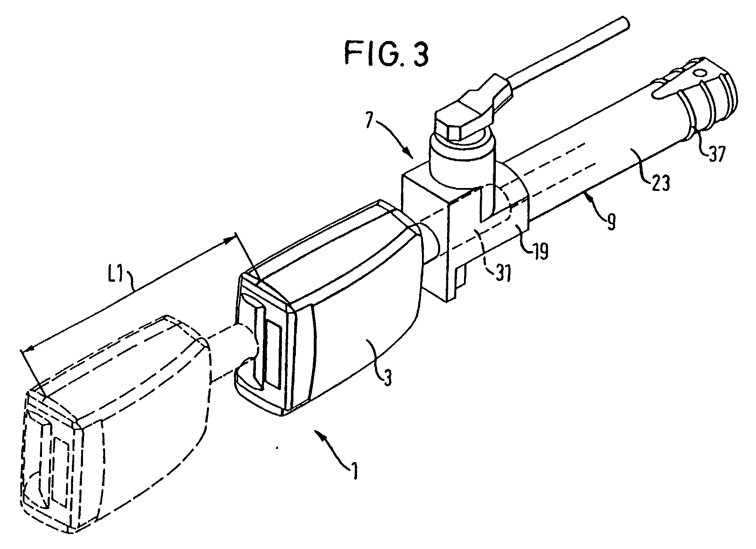

Das in den Figuren 2 und 3 gezeigte Sicherheitsgurtsystem 1 baut insbesondere axial wesentlich kleiner als das in Figur 1 gezeigte, da die Bewegungsrichtungen des Gurtschlosses 3 und des im Zylinder 23 angeordneten Kolbens einer Kolben/-Zylinder-Einheit 9 übereinstimmen. Die Bewegungsrichtung des Gurtschlosses 3 ist dabei bei betätigter Rückstrammeinrichtung 7 durch den mit R bezeichneten Pfeil angedeutet. An dem dem Gurtschloß 3 gegenüberliegenden Ende des Zylinders 23 weist dieser an seiner Mantelfläche ein Außengewinde 37 auf, mittels dem die Rückstrammeinrichtung 7 samt Gurtschloß 3 in eine entsprechende Gewindebohrung im Fahrzeugboden eingeschraubt werden kann, so daß nur noch ein Teil des Zylinders 23 aus diesem in den Fahrzeuginnenraum ragt.

In Figur 3 ist mit unterbrochenen Linien die ursprüngliche Lage des Gurtschlosses 3 bei nicht aktivierter Kolben/-Zylinder-Einheit 9 und mit durchgehenden Linien die Lage des Gurtschlosses 3 nach dem Aktivieren der Kolben/Zylinder-Einheit 9 dargestellt. Mit L1 ist der maximale Straffweg bezeichnet. Zu erkennen ist hierbei, daß die Seilkausche 31, die das Gurtschloß 3 mit dem Zugseil 5 verbindet, bei betätigter Rückstrammeinrichtung 7 stirnseitig in das Gasgeneratorgehäuse 19 eindringt und sich sogar durch dieses hindurch und auch durch eine in dieser Ansicht nicht zu erkennende Stirnwand des Zylinders 23 hindurch in das Innere des Zylinders 23 erstreckt.

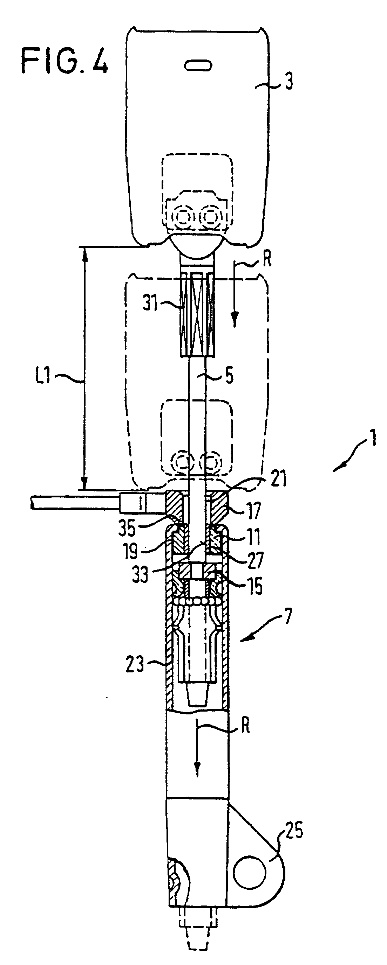

Bei der in Figur 4 gezeigten Ausführungsform ist das Gurtschloß 3 bei nicht betätigter Rückstrammeinrichtung 7 mit durchgehenden und bei betätigter Rückstrammeinrichtung 7 mit unterbrochenen Linien gezeigt. Bei dieser Ausführungsform des Sicherheitsgurtsystems 1 ist der Gasgenerator 11 im Inneren des Zylinders 23 angeordnet, in dem ein patronenförmiges Gasgeneratorgehäuse 19 an eine Stirnwand 35 des Zylinders 23 angrenzt. Die Stirnwand 35 wird teilweise durch den Zylinder 23 und teilweise durch eine entsprechende Stirnwand des Gasgeneratorgehäuses 19 gebildet, so daß die Rückstrammeinrichtung 7 axial kürzer baut, da nicht zwei axial aneinandergrenzende Stirnwände vorgesehen sind. Das Gasgeneratorgehäuse 19, das koaxial zum Zylinder 23 angeordnet ist, hat eine zentrische Öffnung 33, durch die sich das Zugseil 5 bis zum Kolben 15 erstreckt, an welchem es befestigt ist. In der Öffnung 33 ist weiter eine das Zugseil 5 umgebende Dichtung 27 vorgesehen. Um eine gute Dichtwirkung zwischen Zugseil 5 und Dichtung 27 zu erreichen, weist das Zugseil 5 eine Ummantelung auf, die eine kreiszylindrische Außenumfangsfläche hat. An die Stirnwand 35 des Gasgeneratorgehäuses 19 grenzt eine ringförmig ausgebildete Zündeinheit 17 mit einer zentrischen Öffnung 21 an, durch die sich das Zugseil 5 zum Kolben 15 erstreckt. Die Zündeinheit 17 kann ferner auch U- oder halbkreisförmig ausgebildet sein.

Der Zylinder 23 ist am Fahrzeugaufbau oder einem Fahrzeugsitz über eine an der Mantelfläche des Zylinders 23 angeformte, seitlich abstehende Befestigungslasche 25 arretiert. Die Befestigungslasche 25 erlaubt ein geringfügiges Schwenken des Zylinders 23, so daß sich dieser geringfügig an die Verlaufsrichtung des Sicherheitsgurtes anpassen kann.

Nach Zünden des im Inneren des Gasgeneratorgehäuses 19 befindlichen pyrotechnischen Materials durch die Zündeinheit 17 zieht der Kolben 15 über das Zugseil 5 das Gurtschloß 3 in Richtung R zum Zylinder 23, wobei am Ende dieser Bewegung die Seilkausche 31 die Stirnwand 35 des Gasgeneratorgehäuses 19, die auch die Stirnwand des Zylinders 23 mit bildet, durchdringt. Die Seilkausche 31 erstreckt sich somit in das Innere des Zylinders 23. Trotz des axial geringen Bauraumes des Sicherheitsgurtsystems 1 ergibt sich ein großer Straffweg L1.

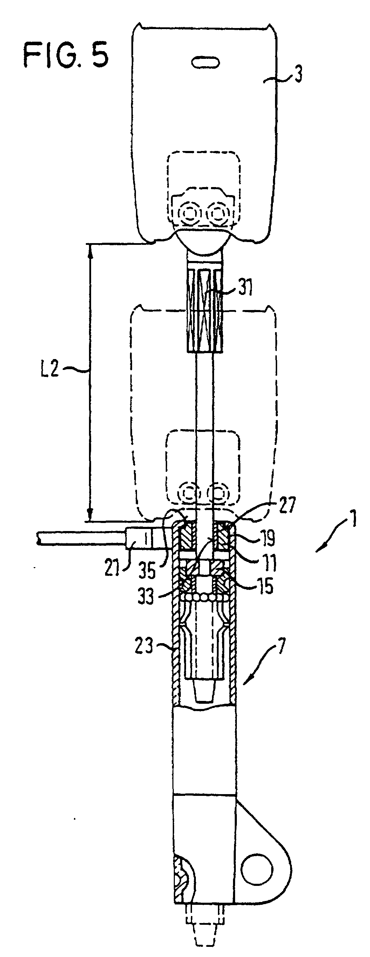

Die in Figur 5 gezeigte dritte Ausführungsform des Sicherheitsgurtsystems 1 entspricht im wesentlichen der in Figur 4 gezeigten Ausführungsform, wobei als Unterschied hierzu die Zündeinheit 21 am Zylindermantel befestigt ist und über eine seitliche Öffnung in diesem und in dem innerhalb des Zylinders 23 angeordneten Gasgeneratorgehäuse 19 mit einem das pyrotechnische Material enthaltenen Raum in Verbindung steht. Hierdurch baut das Sicherheitsgurtsystem 1 axial noch kürzer. Zudem kann zur Begrenzung des Straffwegs L2 das Gehäuse des Gurtschlosses 3 an die Stirnwand 35 der Kolben/-Zylinder-Einheit 9 anschlagen.

Als mögliche Variation der in Figur 5 gezeigten Ausführungsform ist es auch denkbar, daß das Gasgeneratorgehäuse 19 ausschließlich durch entsprechend geformte Wandungsteile des Zylinders 23 gebildet ist.

Die in den Figuren 2 bis 5 gezeigten Ausführungsformen des Sicherheitsgurtsystems 1 zeichnen sich bei gleichem Straffweg im Vergleich zu dem in Figur 1 gezeigten, bekannten Sicherheitsgurtsystem durch eine wesentlich kompaktere, insbesondere axial kürzere Bauweise aus.

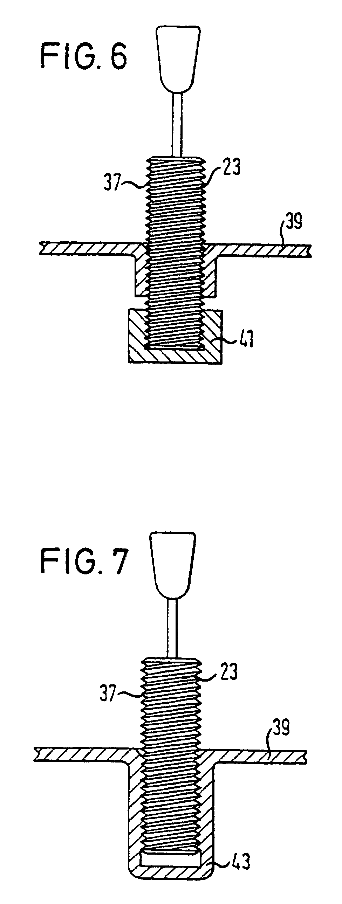

In den Figuren 6 bis 11 sind alternative Befestigungsmöglichkeiten für den Zylinder 23 gezeigt.

Bei der in Fig. 6 gezeigten Befestigungsmöglichkeit des Zylinders 23 in einem Fahrzeugboden 39 wird der Zylinder 23 mit seinem Außengewinde 37 in eine Öffnung im Fahrzeugboden 39 eingeschraubt. Der Zylinder 23 durchdringt den Fahrzeugboden 39 und steht nach unten vor. Eine Schutzkappe 41 am nach unten vorstehenden Ende des Zylinders 23 schützt diesen. Das untere stirnseitige Ende des Zylinders 23 und die Schutzkappe 41 sind so aufeinander abgestimmt, daß bei aktivierter Rückstrammeinrichtung die Schutzkappe 41 durch den sich nach unten bewegenden Kolben oder die dadurch verdrängte Luft abgesprengt wird, so daß die erforderliche Baulänge des Zylinders 23 verkürzt werden kann.

Die in Fig. 7 gezeigte Befestigungsmöglichkeit zeichnet sich dadurch aus, daß der Zylinder 23 in eine im Fahrzeugboden 39 ausgeformte Vertiefung 43 eingebaut ist, so daß der Zylinder vom Fahrzeugboden her besser geschützt ist.

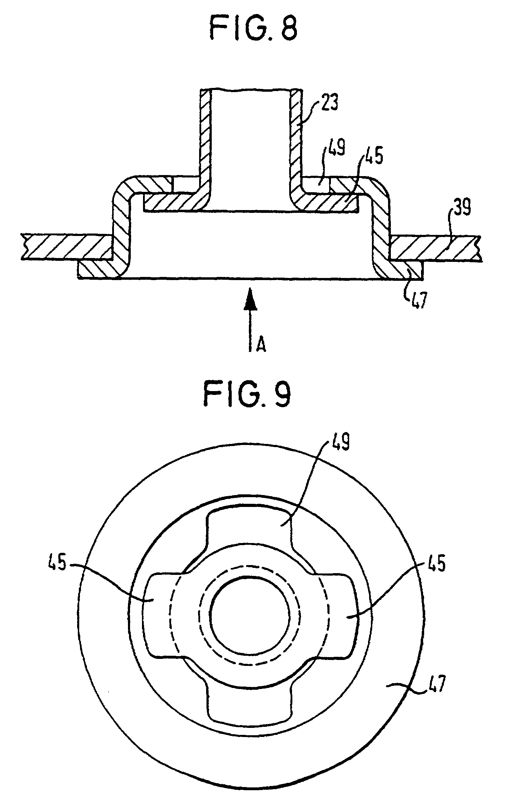

In der in den Figuren 8 und 9 gezeigten Ausführungsform ist das untere Ende des Zylinders 23 mit zwei Fortsätzen 45 ausgestattet, die Teil eines Bajonettverschlusses sind. Das entsprechende Gegenteil besteht aus einer in einem Loch im Fahrzeugboden 39 befestigten Hülse 47 mit einer entsprechenden Öffnung 49, über die der Zylinder 23 in die Hülse 47 einführbar ist.

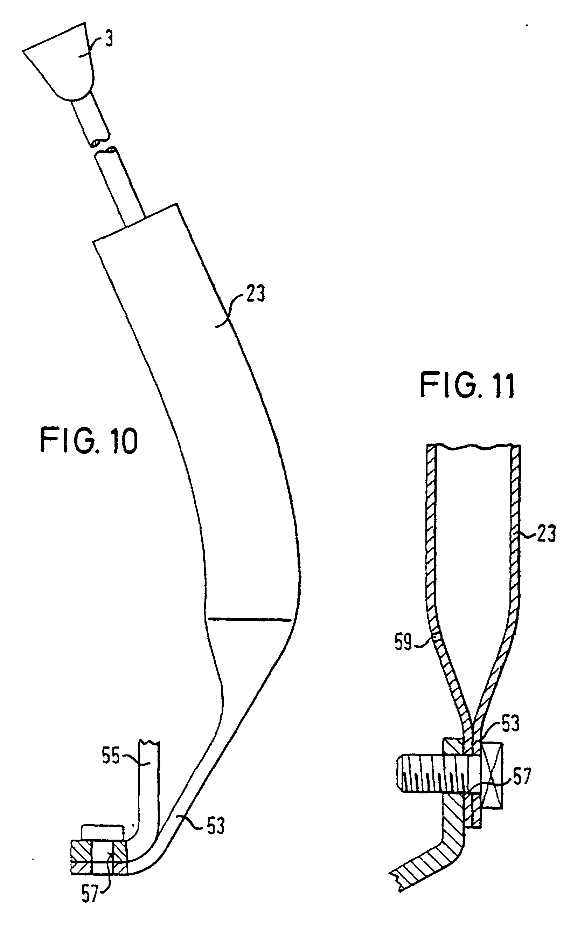

Eine weitere kostengünstige Möglichkeit, den Zylinder am Fahrzeugaufbau oder an einem Fahrzeugsitz zu befestigen, ist in den Figuren 10 und 11 gezeigt. Dabei wird das hintere Ende 53 des Zylinders 23 zu einer zweilagigen Platte zusammengedrückt, welche mit einer Öffnung 57 versehen ist, über die der Zylinder 23 am Sitzgestell 55 befestigt werden kann.

Das hintere Ende 53 kann dabei, um zu einer schwerer zugänglichen Befestigungsstelle zu gelangen, gebogen sein oder, wie in Fig. 11 gezeigt, geradlinig verlaufen.

Zudem kann auch mindestens eine Abluftbohrung 59 im Bereich des noch nicht zusammengedrückten Endes des Zylinders 23 vorgesehen sein, durch die die durch den Kolben verdrängte Luft ausströmen kann, so daß dem Kolben möglichst wenig Widerstand bei seiner Verschiebung entgegenwirkt.

## Patentansprüche

1. Sicherheitsgurtsystem mit einem Gurtschloß (3) und einer über ein Zugmittel an dem Gurtschloß (3) angreifenden Rückstrammeinrichtung (7), zur Bewegung des Gurtschlosses auf einem Straffweg, wobei die Rückstrammeinrichtung eine durch einen Gasgenerator (11) aktivierbare Kolben/Zylinder-Einheit (9) umfaßt und am Fahrzeugaufbau oder an einem Fahrzeugsitz befestigbar ist, wobei die Bewegungsrichtungen des Gurtschlosses (3) und des Kolbens (15) der Kolben/Zylinder-Einheit (9) bei aktivierter Rückstrammeinrichtung (7) übereinstimmen
und der Gasgenerator (11) mit einem Gasgeneratorgehäuse (19) an eine dem Gurtschloß (3) zugewandte Stirnwand (35) der Kolben/Zylinder-Einheit (9) angrenzt, wobei sich das Zugmittel (5) durch eine Öffnung (33) in der Stirnwand (35) hindurch zum Kolben (15) erstreckt,
**dadurch gekennzeichnet, daß** das zugmittel als Zugseil (5) ausgeführt ist, und daß durch Auschlagen des Gehäuses des Gurtschlosses (3) an der Stirnwand (35) der Kolben/zylinder-Einheit (9) der Straffweg begrenzt ist.

2. Sicherheitsgurtsystem nach Anspruch 1, **dadurch gekennzeichnet, daß** das Zugseil (5) über eine Seilkausche (31) am Gurtschloß (3) befestigt ist, wobei die Seilkausche (31) nach Aktivierung der Rückstrammeinrichtung (7) die ihr zugewandte Stirnwand (35) der Kolben/Zylinder-Einheit (9) durchdringt.

3. Sicherheitsgurtsystem nach einem der vorstehenden Ansprüche, **dadurch gekennzeichnet, daß** das Gasgeneratorgehäuse (19) Teil des Zylinders (23), oder umgekehrt der Zylinder (23) Teil des Gasgeneratorgehäuses (19) ist.

4. Sicherheitsgurtsystem nach einem der vorstehenden Ansprüche, **dadurch gekennzeichnet, daß** in einer Öffnung (33) im Zylinder (23) und/oder im Gasgeneratorgehäuse (19) eine das Zugseil (5) umgebende Dichtung (27) vorgesehen ist.

5. Sicherheitsgurtsystem nach einem der vorstehenden Ansprüche, **dadurch gekennzeichnet, daß** der Gasgenerator (11) im Inneren des Zylinders (23) angeordnet ist.

6. Sicherheitsgurtsystem nach einem der vorstehenden Ansprüche, **dadurch gekennzeichnet, daß** eine Zündeinheit (17) an die dem Gurtschloß (3) zugewandte Stirnwand (35) des Gasgeneratorgehäuses (19) angrenzt und sich das Zugseil (5) durch eine Öffnung (21) in der Zündeinheit (17) hindurch zum Kolben (15) erstreckt.

7. Sicherheitsgurtsystem nach einem der vorstehenden Ansprüche, **dadurch gekennzeichnet, daß** eine Zündeinheit (21) am Zylindermantel befestigt ist und über eine seitliche Öffnung in diesem und in dem innerhalb des Zylinders (23) angeordneten Gasgeneratorgehäuse (19) mit einem das pyrotechnische Material enthaltenden Raum in Verbindung steht.

8. Sicherheitsgurtsystem nach einem der vorstehenden Ansprüche, **dadurch gekennzeichnet, daß** der Zylinder (23) über ein Befestigungsmittel am Fahrzeugaufbau oder an einem Fahrzeugsitz befestigt ist.

9. Sicherheitsgurtsystem nach einem der vorstehenden Ansprüche, **dadurch gekennzeichnet, daß** der Zylinder (23) schwenkbar am Fahrzeugaufbau oder einem Fahrzeugsitz befestigbar ist.

10. Sicherheitsgurtsystem nach einem der vorstehenden Ansprüche, **dadurch gekennzeichnet, daß** an der Mantelfläche des Zylinders (23) eine seitlich abstehende Befestigungslasche (25) angeformt ist.

11. Sicherheitsgurtsystem nach einem der vorstehenden Ansprüche, **dadurch gekennzeichnet, daß** der Zylinder (23) an seinem hinteren Ende (53) zu einer zweilagigen Platte zusammengedrückt ist, welche mit einer Öffnung (57) versehen ist, über die der Zylinder (23) am Fahrzeugaufbau oder an einem Fahrzeugsitz befestigt werden kann.

12. Sicherheitsgurtsystem nach einem der vorstehenden Ansprüche, **dadurch gekennzeichnet, daß** der Zylinder (23) befestigungsseitig mindestens eine Abluftbohrung (59) aufweist.

13. Sicherheitsgurtsystem nach einem der Ansprüche 1 bis 8, **dadurch gekennzeichnet, daß** an der Mantelfläche des Zylinders (23) ein Außengewinde (37) zur Befestigung in einer Gewindebohrung am Fahrzeugboden angeordnet ist.

14. Sicherheitsgurtsystem nach einem der Ansprüche 1 bis 8 und 13, **dadurch gekennzeichnet, daß** der Zylinder (23) mit einer Schutzkappe (41) an seinem im eingebauten Zustand durch eine Öffnung aus dem Fahrzeugboden (39) ragenden Ende versehen ist, welche durch die Aktivierung der Rückstrammeinrichtung (7) abgesprengt werden kann.

15. Sicherheitsgurtsystem nach einem der Ansprüche 1 bis 8, 13 oder 14, **dadurch gekennzeichnet, daß** ein Bajonettverschluß vorgesehen ist, über den der Zylinder (23) am Fahrzeugboden (39) befestigt werden kann.

16. Sicherheitsgurtsystem nach einem der vorstehenden Ansprüche, **dadurch gekennzeichnet, daß** das Zugseil (5) mit einer Ummantelung umgeben ist, die eine kreiszylindrische Außenumfangsfläche hat.

## Claims

1. A safety belt system comprising a belt buckle (3) and a belt tightening device (7) adapted to act on the belt buckle (3) via a traction means, for moving the belt buckle on a tensioning distance, said belt tightening device including a piston/cylinder unit (9) able to be activated by a gas generator (11) and being adapted to be secured to the vehicle body or to a vehicle seat, the directions of movement of the belt buckle (3) and of the piston (15) of the piston/cylinder unit (9) being the same when the belt tightening device (7) is activated,
and the gas generator (11) having a gas generator housing (19) adjacent to an end wall (35) of the piston/cylinder unit (9), said end wall (35) facing the belt buckle (3), the traction means (5) extending through an opening (33) in the end wall (35) to the piston (15),
**characterized in that** the traction means is configured as a traction cable (5), and **in that** the tensioning distance is limited by the housing of the belt buckle (3) striking against the end wall (35) of the piston/cylinder unit (9).

2. The safety belt system as claimed in claim 1, **characterized in that** the traction cable (5) is fastened to the belt buckle (3) by means of a cable socket (31), said cable socket (31) penetrating the end wall (35) facing it of the piston/cylinder unit (9) upon activation of the belt tightening device (7).

3. The safety belt system as claimed in either one of the preceding claims, **characterized in that** the gas generator housing (19) is a part of the cylinder (23) or, vice versa, the cylinder (23) is a part of the gas generator housing (19).

4. The safety belt system as claimed in any one of the preceding claims, **characterized by** a seal (27) surrounding the traction cable (5), said seal (27) being provided in an opening (33) in the cylinder (23) and/or in the gas generator housing (19).

5. The safety belt system as claimed in any one of the preceding claims, **characterized in that** the gas generator (11) is arranged in the interior of the cylinder (23).

6. The safety belt system as claimed in any one of the preceding claims, **characterized in that** an ignition unit (17) adjoins the end wall (35) of the gas generator housing (19), said end wall facing the belt buckle (3), and **in that** the traction cable (5) extends through an opening (21) in the ignition unit (17) to the piston (15).

7. The safety belt system as claimed in any one of the preceding claims, **characterized in that** an ignition unit (21) is secured to the cylinder jacket and is connected with a space containing the pyrotechnical material via a lateral opening in the cylinder jacket and in the gas generator housing (19) arranged within the cylinder (23).

8. The safety belt system as claimed in any one of the preceding claims, **characterized in that** the cylinder (23) is secured to the vehicle body or to a vehicle seat by a securing means.

9. The safety belt system as claimed in any one of the preceding claims, **characterized in that** the cylinder (23) is adapted to be pivotally mounted to the vehicle body or to a vehicle seat.

10. The safety belt system as claimed in any one of the preceding claims, **characterized by** a laterally projecting mounting lug (25) molded on the peripheral outer surface of the cylinder (23).

11. The safety belt system as claimed in any one of the preceding claims, **characterized in that** the cylinder (23) is pressed together at its rear end (53) so as to form a two-layer plate which is provided with an opening (57) via which the cylinder (23) may be secured to the vehicle body or to a vehicle seat.

12. The safety belt system as claimed in any one of the preceding claims, **characterized by** at least one venting hole (59) in the cylinder (23) provided on the attachment side thereof.

13. The safety belt system as claimed in any one of claims 1 to 8, **characterized by** a male screw thread (37) provided on the peripheral outer surface of the cylinder (23) for attachment of the cylinder in a screw threaded hole in the vehicle floor.

14. The safety belt system as claimed in any one of claims 1 to 8 and 13, **characterized in that** the cylinder (23) is provided with a protective cap (41) on an end thereof which in the mounted state projects through an opening from the vehicle floor (39), said protective cap (41) being adapted to be blasted off by activation of the belt tightening device (7).

15. The safety belt system as claimed in any one of claims 1 to 8, 13 or 14, **characterized by** a bayonet closure provided for the attachment of the cylinder (23) to the vehicle floor (39).

16. The safety belt system as claimed in any one of the preceding claims, **characterized in that** the traction cable (5) is surrounded by a casing having a circularly cylindrical outer peripheral surface.

## Revendications

1. Système de ceinture de sécurité comprenant un fermoir de ceinture (3) et un dispositif de raidissement (7) qui agit sur le fermoir de ceinture (3) par l'intermédiaire d'un moyen de traction (5) pour déplacer le fermoir de ceinture sur une course de tension, le dispositif de raidissement (7) comprenant une unité à piston-et-cylindre (9) pouvant être actionnée par un générateur de gaz (11) et pouvant être fixé sur la carrosserie du véhicule ou sur un siège de véhicule, les directions de mouvement du fermoir de ceinture (3) et du piston (15) de l'unité à piston-et-cylindre (9) étant concordantes lorsque le dispositif de raidissement (7) est activé,
et le générateur de gaz (11) avec un boîtier (19) de générateur de gaz étant contigu à une paroi frontale (35), tournée vers le fermoir de ceinture (3), de l'unité à piston-et-cylindre (9), le moyen de traction (5) s'étendant à travers une ouverture (13) dans la paroi frontale (35) jusqu'au piston (15),
**caractérisé en ce que** le moyen de traction est réalisé sous forme de câble de traction (5) et **en ce que** la course de tension est limitée par la venue en butée du boîtier du fermoir de ceinture (3) contre la paroi frontale (35) de l'unité à piston-et-cylindre (9).

2. Système de ceinture de sécurité selon la revendication 1, **caractérisé en ce que** le câble de traction (5) est fixé par l'intermédiaire d'une cosse de câble (31) au fermoir de ceinture (3) , la cosse de câble (3) traversant la paroi frontale (35), tournée vers elle, de l'unité à piston-et-cylindre (9), après activation du dispositif de raidissement (7).

3. Système de ceinture de sécurité selon l'une quelconque des revendications précédentes, **caractérisé en ce que** le boîtier (19) de générateur de gaz fait partie du cylindre (23) ou, inversement, le cylindre (23) fait partie du boîtier (19) du générateur de gaz.

4. Système de ceinture de sécurité selon l'une quelconque des revendications précédentes, **caractérisé en ce qu'**un joint (27) entourant le câble de traction (5) est prévu dans une ouverture (33) du cylindre (23) et/ou dans le boîtier (19) de générateur de gaz.

5. Système de ceinture de sécurité selon l'une quelconque des revendications précédentes, **caractérisé en ce que** le générateur de gaz (11) est agencé à l'intérieur du cylindre (23).

6. Système de ceinture de sécurité selon l'une quelconque des revendications précédentes, **caractérisé en ce qu'**une unité d'amorçage (17) est adjacente à la paroi frontale (35) tournée vers le fermoir de ceinture (3), du boîtier (19) de générateur de gaz, et **en ce que** le câble de traction (5) s'étend à travers un orifice (21) de l'unité d'amorçage (17) jusqu'au piston (15).

7. Système de ceinture de sécurité selon l'une quelconque des revendications précédentes, **caractérisé en ce qu'**une unité d'amorçage (17) est fixée sur l'enveloppe du cylindre et communique avec un espace contenant le matériau pyrotechnique par une ouverture latérale pratiquée dans celle-ci et dans le boîtier (19) de générateur de gaz agencé à l'intérieur du cylindre (23).

8. Système de ceinture de sécurité selon l'une quelconque des revendications précédentes, **caractérisé en ce que** le cylindre (23) est fixé sur la carrosserie du véhicule ou sur un siège du véhicule par l'intermédiaire d'un moyen de fixation.

9. Système de ceinture de sécurité selon l'une quelconque des revendications précédentes, **caractérisé en ce que** le cylindre (23) peut être fixé pivotant sur la carrosserie du véhicule ou sur un siège du véhicule.

10. Système de ceinture de sécurité selon l'une quelconque des revendications précédentes, **caractérisé en ce qu'**une patte de fixation (25) en saillie latérale est moulée sur la surface enveloppe du cylindre (23).

11. Système de ceinture de sécurité selon l'une quelconque des revendications précédentes, **caractérisé en ce qu'**à son extrémité postérieure, le cylindre (23) est comprimé pour former une plaque à deux couches qui est pourvue d'une ouverture (57) permettant de fixer le cylindre (23) sur la carrosserie du véhicule ou sur un siège du véhicule.

12. Système de ceinture de sécurité selon l'une quelconque des revendications précédentes, **caractérisé en ce que** le cylindre (23) présente, côté fixation, au moins un trou d'évent (59).

13. Système de ceinture de sécurité selon l'une quelconque des revendications 1 à 8, **caractérisé en ce qu'**un filetage extérieur (37) est réalisé sur la surface enveloppe du cylindre (23) pour être fixé dans un perçage taraudé sur le plancher du véhicule.

14. Système de ceinture de sécurité selon l'une quelconque des revendications 1 à 8 et 13, **caractérisé en ce que**, à son extrémité faisant saillie hors du plancher (39) du véhicule à travers une ouverture, en position montée, le cylindre (23) est muni d'une coiffe de protection (41) qui peut être arrachée par éclatement lors de l'activation du dispositif de raidissement (7).

15. Système de ceinture de sécurité selon l'une quelconque des revendications 1 à 8, 13 ou 14, **caractérisé en ce qu'**il est prévu une fermeture à baïonnette permettant de fixer le cylindre (23) au plancher (39) du véhicule.

16. Système de ceinture de sécurité selon l'une quelconque des revendications précédentes, **caractérisé en ce que** le câble de traction (5) est entouré d'une gaine présentant une surface périphérique extérieure cylindrique circulaire.
